# FASCICULE DE BREVET EUROPEEN

(11) **EP 0 883 507 B1**
(45) Date de publication et mention de la délivrance du brevet: **14.06.2000**
(21) Numéro de dépôt: 97908444.9
(22) Date de dépôt: 04.03.1997
(51) Int. Cl.: B60J 7/06

(54) **DISPOSITIF D'OUVERTURE DE CONTENEUR MUNI D'UNE BACHE**
ÖFFNUNGSVORRICHTUNG FÜR EINEN MIT EINER PLANE AUSGERÜSTETEN BEHÄLTER
DEVICE FOR OPENING A CONTAINER WITH A SOFT TOP

(30) Priorité: 04.03.1996 BE 9600186
(43) Date de publication de la demande: 16.12.1998
(73) Titulaire: Etes N.V., 3530 Houthalen (BE)
(72) Inventeur: HORVATH, Andras, H-1143 Budapest (HU)
(74) Mandataire: Vandeberg, Marie-Paule L.G.
(86) Numéro de dépôt international: IB9700343
(87) Numéro de publication internationale: WO9732745

(56) Documents cités:
- EP-A- 0 459 879
- DE-C- 534 433
- DE-C- 916 497
- FR-A- 790 277

## Description

La présente invention concerne un dispositif d'ouverture de conteneur muni d'une bâche. Par "conteneurs", on entend ci-dessous les bennes de véhicules de transport, les remorques et semi-remorques, ainsi que les conteneurs indépendants de tout véhicule de transport. Sur chaque conteneur, la bâche peut se trouver soit au niveau du toit, soit sur un ou plusieurs des côtés, ou soit aussi bien au niveau du toit que d'un ou plusieurs côtés.

D'une manière générale, les bâches servent à protéger le contenu des conteneurs contre les intempéries. Elles servent également à éviter que les marchandises, souvent des produits en vrac, ne s'envolent ou ne se dégradent.

Pour charger et décharger un conteneur, il est souvent nécessaire d'en enlever temporairement la bâche. Sans dispositifs adéquats, il s'agit d'un travail laborieux, qui peut difficilement être effectué par une personne seule.

C'est pourquoi on a cherché des moyens pour faciliter l'ouverture et la fermeture de telles bâches, aussi bien des bâches de toit que des bâches de côté.

On connaît par le brevet US-A-3,820,840 un dispositif comportant deux rails montés sur la caisse d'un véhicule de transport bâché, sur lesquels des chariots à roulettes peuvent coulisser. Sur lesdits chariots sont montés des ressorts métalliques, qui, lorsque les chariots sont rapprochés les uns des autres lors de l'ouverture de la bâche, replient celle-ci en accordéon.

Dans le dispositif décrit dans ce brevet, les ressorts sont fixés aux chariots par un pivot, et ils sont attachés à la bâche par des boucles sur les bras des ressorts. Ce dispositif, d'une relative complexité, est sensible à la rouille, et à la fatigue. En cas d'endommagement, un démontage en usine de la bâche est nécessaire pour effectuer des réparations.

On connaît par FR-A-790277 un dispositif pour le déplacement d'une capote d'un véhicule comportant des bandes de guidage formées de lames métalliques rigides articulées à pivotement autour de pièces spécialement prévues à cet effet. Chaque bande de guidage est également montée à pivotement, par une de ses extrémités, à un chariot.

On connaît également, notamment par les demandes de brevet DE-A-31 37 437 et EP-A-0 069 391, des dispositifs pourvus de ciseaux qui aident à replier la bâche. Ces ciseaux ont comme inconvénient que la bâche peut être pincée entre leurs éléments articulés, ce qui risque de l'endommager. Ici aussi les réparations éventuelles doivent être effectuées en usine, car la bâche est fixée au côté supérieur des ciseaux.

Les éléments métalliques, tels que les ciseaux et les ressorts, sont sujets à l'oxydation et à la fatigue.

Un dispositif à bandes souples, tel que décrit dans la demande de brevet EP-A-0 379 821 évite un tel endommagement de la bâche par pinçage. Ce dispositif comprend des arceaux transversaux. Chaque arceau est relié à l'arceau suivant par une bande flexible, en une matière tendant à reprendre élastiquement sa forme initiale lorsqu'elle a été fléchie. Cette bande est contrainte de manière à présenter une forme convexe vers le haut entre les arceaux. La longueur de la bande entre chaque paire d'arceaux successifs est légèrement supérieure à la distance qui sépare ceux-ci dans leur position espacée, qui correspond à la position effective de soutien de la bâche fermant le véhicule. Lorsque les arceaux sont tirés les uns contre les autres, les portions de bandes entre les arceaux sont forcées de se plier vers le haut, entraînant ainsi la bande avec elles, et la forçant à former des plis vers le haut. La bande est disposée suivant l'axe longitudinal du véhicule.

La bande est fixée sur la partie inférieure de chaque arceau et elle s'étend à travers une ferrure incurvée formant tunnel. Cette ferrure incurvée lui impose une forme incurvée convexe vers le haut.

Ce dispositif est plus léger et ne rouille pas mais ne permet cependant pas d'entraîner le plissement de la bâche vers le haut lors de son ouverture s'il y a un poids dessus, tel que celui d'une masse d'eau de pluie, de neige ou analogue. En outre, la bande s'étend sur toute la longueur de la bâche, et, en cas d'endommagement, il est difficile de remplacer une partie du dispositif sans démontage complet en usine.

On connaît par EP-A-0 459 879 un dispositif pour le bâchage de véhicule comportant des lattes déformables élastiquement s'étendant longitudinalement sur toute la longueur de la bâche. Ces lattes peuvent être réalisées en plastique, armé ou non, ou de cordes de piano. Ces lattes sont difficiles à remplacer et peuvent être sensibles à l'oxydation.

On connaît également un dispositif qui est commercialisé par la société HOECHST AG sous la marque SESAM®. Celui-ci comporte des rails qui s'étendent sur la longueur du conteneur. Des chariots métalliques coulissants, entre lesquels sont fixées des bandes flexibles, sont montés sur ces rails. Chaque bande flexible comporte une zone centrale mince, apte à plier lors de l'ouverture du dispositif, et deux zones latérales plus épaisses terminées par des extrémités libres, attachées chacune par plusieurs rivets et une plaque métallique rapportée à un chariot coulissant.

L'ensemble forme une structure de support pour les bords longitudinaux de la bâche. Lors de l'ouverture de la bâche, les chariots se rapprochent les uns des autres, entraînant ainsi le pliage des bandes, dont la zone centrale se soulève et ploie sous la pression exercée. L'ensemble force ainsi la bâche à s'ouvrir en formant des plis en accordéon. Les deux zones latérales de chaque bande guident la bâche sans plier elles-mêmes, et, lors de l'ouverture, elles adoptent une position oblique par rapport au rail.

Sous l'influence d'un poids sur le toit, dû par exemple à la présence d'eau de pluie ou de neige accumulée ou pour toute autre raison, une ou plusieurs bandes peuvent avoir tendance à s'infléchir vers le bas. Si on essaie d'ouvrir le toit dans de telles conditions, on risque d'accentuer de manière inadmissible la déformation vers le bas et d'endommager les bandes concernées. Les bandes ainsi déformées - principalement dans la zone centrale mince où se produit le pliage - bloquent le mouvement des chariots sur le rail et empêchent la manipulation normale du toit.

Entre la position fermée et la position ouverte de la bâche, la zone centrale mince subit des mouvements de près de 180 °, ce qui entraîne à la longue une usure. Celle-ci conduit généralement à une rupture spécifiquement localisée dans cette zone centrale mince.

Un but de l'invention est de fournir un dispositif d'ouverture d'un conteneur muni d'une bâche qui ne présente pas les inconvénients décrits ci-dessus.

En particulier, un but de l'invention est de fournir un tel dispositif à la fois léger, efficace, peu sensible à l'usure et présentant donc une fiabilité accrue.

Un but de l'invention est que le dispositif assure un pliage correct de la bâche même en présence d'une charge sur celle-ci.

La présente invention a pour objet un dispositif d'ouverture de conteneur muni d'une bâche ; ce dispositif comporte deux rails, disposés parallèlement, des chariots coulissants, aptes à se déplacer le long desdits rails, reliés chacun par une barre transversale à un autre chariot correspondant se trouvant sur l'autre rail, des bandes de guidage, s'étendant entre deux chariots consécutifs dont la face supérieure est tournée vers ladite bâche, ces bandes de guidage étant aptes à guider ladite bâche pour la plier en accordéon lors de son ouverture, et des moyens de fixation, aptes à fixer les extrémités libres d'une bande de guidage à deux chariots coulissants consécutifs.

les bandes de guidage sont en matière plastique moulée par injection et fabriquées d'un seul tenant; lesdites bandes de guidage comportent deux parties latérales rigides, ces parties latérales étant reliées de façon articulée par leurs extrémités proximales à une partie centrale au moyen de zones minces formant charnières.

Ces parties latérales peuvent être reliées par leurs extrémités distales à ces extrémités libres également au moyen de zones minces formant charnières.

La partie centrale d'une bande de guidage présente avantageusement, vue en coupe transversale, une face supérieure et deux flancs inclinés convergeant vers le bas; la partie centrale peut présenter, notamment, en section, une forme en substance triangulaire ou trapézoïdale. Les extrémités proximales des parties latérales comportent des arrêts, chacun de ces arrêts formant, avec la face supérieure de la partie latérale correspondante un angle sensiblement complémentaire à l'angle que forme le flanc correspondant avec la face supérieure de la partie centrale.

De préférence, chaque partie latérale est pourvue de raidisseurs à sa face inférieure.

Dans ce cas, lorsqu'une bande de guidage est en extension maximale, au moins une arête inférieure desdits raidisseurs peut avantageusement venir buter sur un rail.

Chaque partie latérale peut être munie de protubérances qui, lorsque la bande de guidage est en extension maximale, viennent buter sur un rail.

Les zones minces formant charnières ont de préférence une largeur comprise entre 1 et 5 mm et une épaisseur comprise entre 0,4 et 2 mm.

Suivant un mode de réalisation avantageux, les moyens de fixation des extrémités libres sur les chariots impliquent une fixation par translation relative. Suivant cette forme d'exécution particulière, les bandes de guidage et les chariots du dispositif suivant l'invention sont extrêmement faciles à monter et à démonter. Le remplacement d'une bande de guidage peut en effet s'effectuer sans outils spécifiques.

Suivant une autre forme de réalisation, les dits moyens de fixation sont des organes métalliques choisis parmi les vis, les boulons et les rivets.

La bâche est de préférence une bâche de toit; dans ce cas, elle peut comporter une partie latérale apte à couvrir au moins partiellement un flanc du conteneur. La bâche peut aussi être une bâche latérale.

Un autre objet de l'invention est une bande de guidage telle que décrite par ailleurs dans le mémoire, destinée à être montée dans un dispositif d'ouverture tel que décrit ci-dessus.

Les dispositifs d'ouverture suivant l'invention sont de conception simple, légers tout en étant solides, et efficaces dans leur fonctionnement.

Ils peuvent être fabriqués selon un procédé simple, rapide et bon marché.

Les dispositifs d'ouverture suivant l'invention supportent des contraintes réduites, et résistent donc mieux à l'usure. Ils sont en outre insensibles aux conditions ambiantes, notamment à l'humidité.

Ils permettent d'actionner la bâche même au cas où un poids important se trouve sur celle-ci, et ceci sans risque d'endommagement.

Ils sont extrêmement résistants et pratiquement incassables.

Les pièces de rechange peuvent éventuellement être emportées pendant le transport de marchandises. Ces pièces occupent une place limitée et sont très légères. Le cas échéant, elles peuvent être vendues sous forme de kits ultra-plats de dimensions réduites.

D'autres particularités et avantages de l'invention seront décrits dans une réalisation particulière, référence étant faite aux dessins annexés dans lesquels
la figure 1 représente d'une manière schématique un conteneur bâché pourvu d'un dispositif d'ouverture selon l'invention, monté sur un véhicule,
la figure 2 représente une vue en perspective d'une forme de réalisation d'une bande de guidage et d'un chariot d'un dispositif d'ouverture selon l'invention, vus du dessus,
la figure 3 représente une bande de guidage en coupe verticale longitudinale selon la ligne III-III de la figure 2,
la figure 4 représente une vue en perspective d'une bande de guidage vue du dessous,
les figures 5 à 8 illustrent chronologiquement, de manière schématique, le principe de fonctionnement du dispositif d'ouverture selon l'invention.

A la figure 5, on est au début de la manoeuvre d'ouverture de la bâche,
les figures 6 et 7 illustrent des positions intermédiaires; la figure 6 montre en particulier une position limite adoptée par une bande de guidage,
la figure 8 montre le dispositif d'ouverture, quand la bâche se trouve repliée en position d'ouverture,
la figure 9 est une vue en perspective d'une autre forme de réalisation du dispositif, et
la figure 10 est une coupe verticale longitudinale suivant la ligne X-X de la bande de guidage de la figure 9.

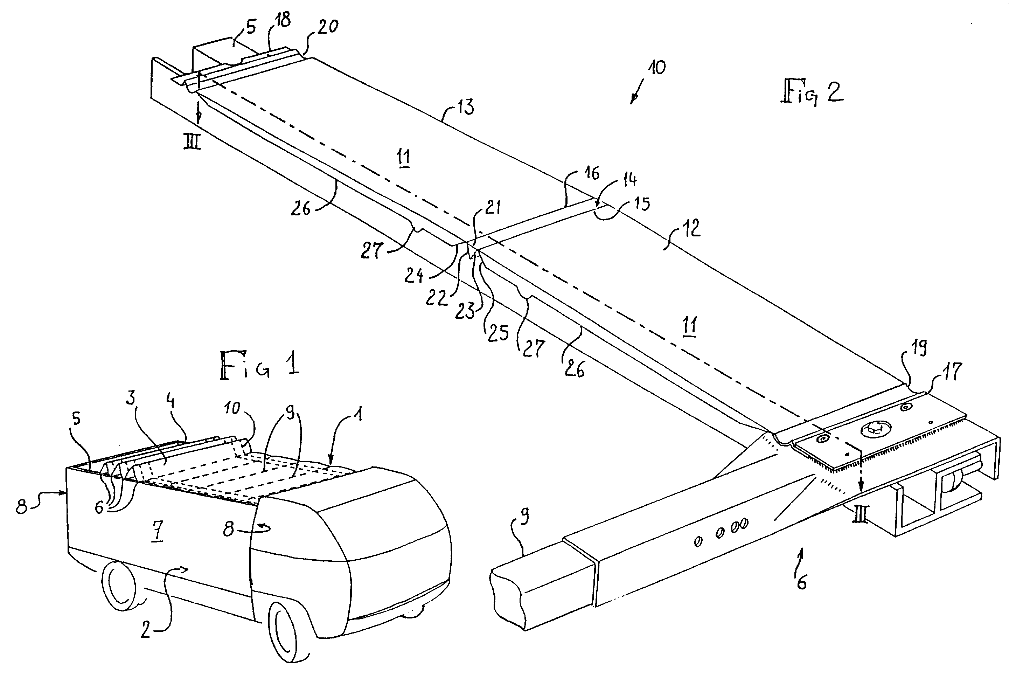

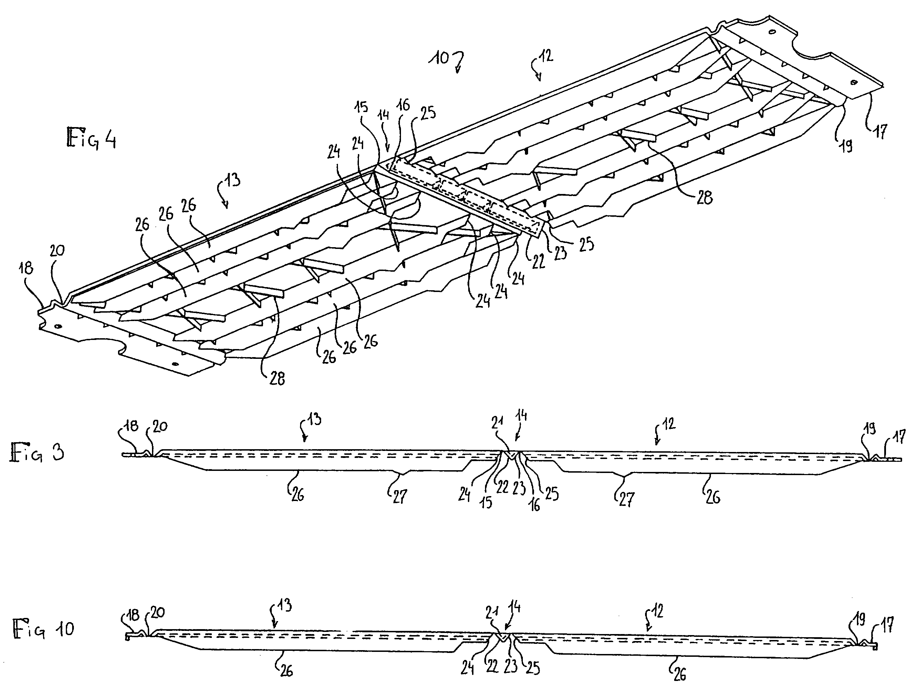

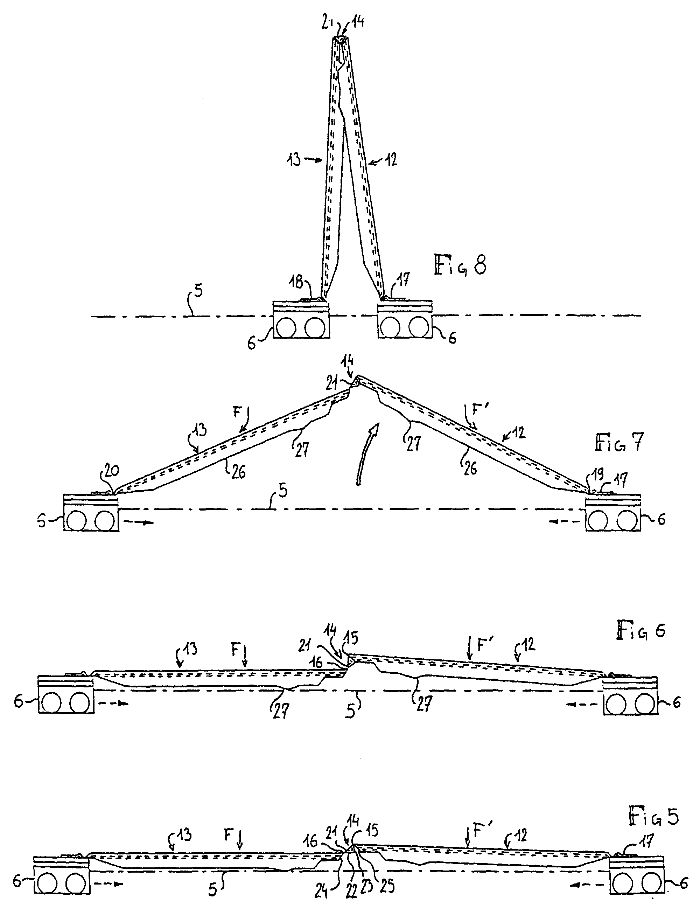

Comme on le voit à la figure 1, le dispositif d'ouverture 1 pour le conteneur 2 muni d'une bâche 3, (en l'occurrence, placé sur un véhicule) comporte deux rails 4, 5, longitudinaux, sur lesquels des chariots 6 coulissants peuvent se déplacer. La bâche 3 peut être présente uniquement sur la partie supérieure du conteneur 2 et servir alors de toit, ou bien elle peut également comporter des surfaces latérales (non représentées) couvrant partiellement ou totalement les flancs 7 du conteneur 2. Le cas échéant, elle peut également se prolonger sur l'une et/ou l'autre des petites faces 8 avant ou arrière du conteneur 2.

La bâche 3 est représentée, à la figure 1, en position partiellement ouverte.

Chaque chariot 6 se trouvant sur le rail 4, est relié par une barre transversale 9 à un autre chariot 6 correspondant (non représenté sur la figure 1) se trouvant sur l'autre rail 5.

La bâche 3 est fixée aux barres transversales 9 par des lanières non représentées. Elle est également fixée à la face antérieure des chariots 6.

Deux chariots 6 consécutifs se trouvant sur le même rail 4 ou 5 sont reliés entre eux par une bande de guidage 10, dont la face supérieure 11 supporte ladite bâche 3.

L'ensemble des bandes de guidage 10 et des chariots 6 permet de manoeuvrer la bâche 3 lors de l'ouverture et de la fermeture du toit.

Chaque bande de guidage 10 est fabriquée d'un seul tenant, par un procédé optimisé de moulage par injection qui sera décrit plus en détail ci-après.

Les figures 2, 3, 4 représentent en détail une partie d'un dispositif selon l'invention, et en particulier, une forme d'exécution d'un chariot 6 et d'une bande de guidage 10 dans la position d'extension maximale qu'elle adopte lorsque la bâche 3 est fermée. Cette bande de guidage 10 comporte différentes parties assumant des fonctions distinctes : deux parties latérales 12, 13, qui sont rigides, reliées entre elles par une partie centrale 14. Les parties latérales 12, 13 s'articulent avec la partie centrale 14 par l'intermédiaire de charnières 15 et 16. Ces charnières 15 et 16 sont formées par une mince zone de pliage très localisée de faible largeur (typiquement de l'ordre de 1 à 5 mm) et de faible épaisseur (typiquement entre 0,4 et 2 millimètres). Cette épaisseur est, de préférence, comprise entre 0,5 et 1 mm.

De même, les parties latérales 12 et 13 sont reliées à des extrémités libres 17 et 18 correspondantes par des charnières 19 et 20. Ces charnières 19 et 20 sont formées également par une mince zone de pliage localisée.

La bande de guidage 10 est fixée par chacune de ses extrémités libres 17 et 18 à un chariot 6 coulissant disposé sur un rail 5 (voir la figure 2 et les figures 5 à 8). La bâche 3 peut être ouverte en rapprochant les chariots 6 les uns vers les autres, par exemple en utilisant un câble de commande (non représenté), en poussant la barre transversale 9 d'une des extrémités du conteneur 2 vers l'autre extrémité, ou d'une quelconque autre manière, par exemple par une activation automatique.

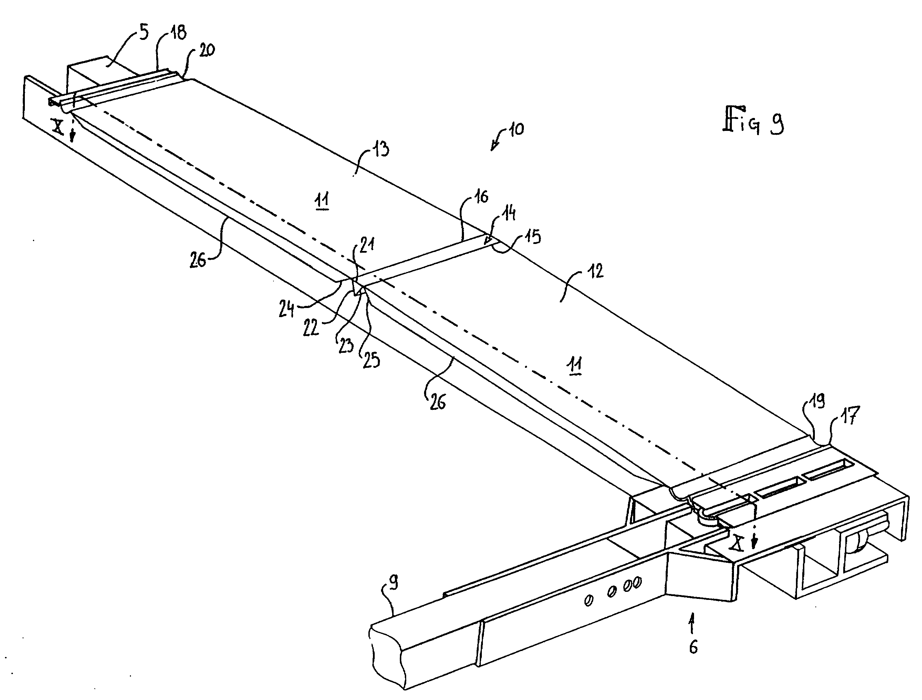

Comme on peut le voir en se référant plus particulièrement aux figures 2 et 3, la partie centrale 14 présente, vue en coupe, une face supérieure 21 et deux flancs 22 et 23 inclinés convergeant vers le bas, immédiatement adjacents à chacune des charnières 15 et 16. Lorsque la bande 10 est en position d'extension complète, le plan passant par la face supérieure 21 de la partie centrale 14 coïncide avec le plan passant par les faces supérieures des parties latérales 12 et 13.

Les extrémités proximales des parties latérales 12 et 13 comportent des arrêts 24 et 25 (formés ici par des extrémités de raidisseurs 26 qui sous-tendent la face inférieure des parties latérales 12 et 13).

Alors que dans les dispositifs connus de l'état de la technique, l'intervention d'une force exercée vers le bas risque de détériorer le mécanisme et/ou d'engendrer des déchirures de la bâche, le dispositif 1 de l'invention fonctionne d'une manière parfaitement satisfaisante dans une telle situation, ainsi qu'on le remarquera en se référant aux figures 5 à 8.

Les flèches F, F' représentent, sur les figures 5, 6, 7, les forces parasites exercées sur une bande de guidage. Le comportement du dispositif 1 de l'invention diffère suivant l'intensité de ces forces F, mais son fonctionnement n'est, d'une manière générale, pas modifié.

Lorsque deux chariots 6 se rapprochent l'un de l'autre lors de la manoeuvre d'ouverture, la partie centrale 14, qui est articulée par rapport aux deux parties latérales 12 et 13, a la possibilité en fonction du rapport F/F' de basculer tout en se rapprochant d'une de ces parties latérales (ici, de la partie latérale 12) si bien que son flanc 23 vient, à l'extrême limite, toucher l'arrêt 25 correspondant. Ainsi, la bande de guidage 10, si elle ne peut amorcer d'emblée un mouvement vers le haut, se plie en forme de S.

Si la force F est très élevée sur une des faces latérales, comme c'est le cas pour la face 13 à la figure 6, on atteint une position limite, où la partie centrale 14 bascule à 90° par rapport à la face supérieure de l'autre face latérale (la face 12, en l'occurrence). Or, par construction, l'angle ménagé entre le flanc 23 et la face supérieure 21 de la partie centrale 14 est fixé comme le complément de l'angle ménagé entre l'arrêt 25 et la face supérieure 11 de la partie latérale 12 adjacente. En conséquence, l'angle formé entre la face supérieure 21 de la partie centrale 14 et la face supérieure 11 de la partie latérale 12 ne peut donc pas devenir inférieur à 90° environ.

La bande de guidage 10 ne peut donc pas se déformer jusqu'à atteindre un profil en Z, ni se retourner : si on continue à rapprocher les chariots 6, elle n'a d'autre possibilité mécanique que de plier vers le haut (d'autant plus violemment que ce mouvement a été longtemps retenu sous l'action de la force F).

Grâce à cet agencement, il n'y a pas de risque de cassure de la bande de guidage 10 lors de l'ouverture de la bâche 3.

La partie centrale 14 force la partie latérale 12 à monter. La partie latérale 13 qui n'est pas encore montée du fait de la contrainte exercée par la force F, étant solidaire de la partie centrale 14, est forcée de suivre le mouvement. Comme on le voit, à aucun moment, le dispositif 1 ne subit d'infléchissement vers le bas, et le mouvement des chariots 6 sur le rail 5 n'est pas entravé. Lorsque les chariots 6 continuent à se rapprocher les uns des autres, la bande de guidage 10 continue à se replier, en entraînant la bâche 3 jusqu'à la position représentée sur la figure 7. On notera qu'à la fin de la manoeuvre d'ouverture, les deux parties latérales 12 et 13 occupent des positions sensiblement symétriques par rapport à la partie centrale 14.

Dès lors que les deux parties latérales 12 et 13 sont infléchies vers le haut, si une masse d'eau est présente sur le toit du conteneur 2, celle-ci sera au moins partiellement évacuée lors du mouvement d'ouverture. En effet, l'eau glissera sur la bâche 3 selon un trajet imposé le long des parties latérales 12 et 13. La masse d'eau sera confinée dans les plis de la bâche 3, et au moins une partie sera expulsée vers l'extérieur du conteneur 2.

L'ouverture de la bâche 3 est facilitée par le fait que l'articulation correcte du dispositif 1 est également assurée par les charnières 19 et 20 près des extrémités libres 17 et 18 de chaque bande de guidage 10. Lorsqu'une bande de guidage 10 est fixée à deux chariots 6, comme expliqué plus loin, les charnières 19 et 20 se trouvent respectivement au-dessus de la face supérieure de chaque chariot 6.

Lors du mouvement de rapprochement de deux chariots 6, dans des conditions normales, les extrémités libres 17 et 18 ne changent pas d'orientation, cependant que chacune des parties latérales 12 et 13 s'incline progressivement suivant un angle compris entre 0° et 90° vers le haut.

Dans la position d'extension maximale des bandes de guidage 10, celles-ci peuvent être en contact avec certains points du rail 5 par l'arête inférieure des raidisseurs 26 ou par des protubérances 27 comme montré dans le mode d'exécution représenté aux Figs. 4 et 8. Toute déflexion de la bande de guidage 10 vers le bas est rendue impossible grâce à cet agencement, qui agit en complément de l'articulation particulière de la partie centrale 14 décrite ci-dessus.

Comme signalé plus haut, la conception particulière des bandes de guidage 10 permet également d'optimiser les paramètres de moulage et, par là, d'accroître d'un facteur important la durabilité des pièces. Du fait de la présence d'une partie centrale 14 bordée par deux charnières 15 et 16 distinctes, la flexion complète de la bande de guidage 10 réduit la sollicitation dans chaque zone mince formant charnière, chacune ayant dans les conditions normales une amplitude de travail limitée à 90° environ.

Du point de vue de la fabrication, la présence d'une partie centrale 14, permet de placer lors du moulage les tubulures d'injection, de manière optimale, sur une des faces de cette partie centrale 14, soit le long de l'axe de symétrie de la pièce. L'injection étant réalisée au niveau de la partie centrale de la pièce, la masse fondue se répand dans le moule de façon particulièrement régulière, homogène et rapide. Le flux de matière remplit d'abord la partie centrale puis s'étend par les deux goulots d'étranglement destinés à former les charnières 15 et 16, qui sont centrales et disposées perpendiculairement au flux. De même, les extrémités libres 17 et 18 de la bande de guidage 10 sont remplies après que les parties latérales 12 et 13 ont été uniformément remplies. On atteint donc un degré d'orientation des molécules très élevé, ce qui améliore remarquablement les qualités des charnières.

La très faible section des charnières a pour conséquence un effet a priori paradoxal, à savoir la réduction des contraintes de cisaillement au sein de la matière, d'où une durée de vie accrue des bandes de guidage.

Il est important dans le secteur du transport de diminuer la tare pour pouvoir augmenter le poids net, le poids brut maximal qui peut être transporté étant fixé.

Les bandes de guidage 10 peuvent être fabriquées par exemple en polypropylène.

L'âme de chaque partie centrale 12,13 étant soumise à des contraintes différentes de celles de ses extrémités, on peut sélectionner plusieurs matières plastiques de compositions différentes, qui sont injectées ou surmoulées dans des zones appropriées des bandes de guidage.

La fixation des bandes de guidage 10 par leurs extrémités libres 17 et 18 sur des chariots 6 peut s'effectuer d'une façon classique, c'est-à-dire à l'aide de vis, boulons ou rivets comme montré à la figure 2. Elle peut également être effectuée au moyen de glissières, comme montré aux figures 9, 10 ce qui offre d'intéressantes perspectives au point de vue du démontage de bandes 10 défectueuses, qui peut alors être effectué in situ, sans l'aide du moindre outil.

Les parties latérales 12, 13 des bandes de guidage 10 étant parfaitement symétriques, il n'y a aucun risque d'erreur de montage.

En comparant les Figs. 4 et 7, on remarque que le repli complet sur elle-même d'une bande de guidage 10 est normalement entravé par la présence des raidisseurs 26 et des protubérances 27. Suivant un mode d'exécution avantageux, la position des raidisseurs 26 des deux parties latérales 12, 13 est légèrement décalée par rapport à l'axe transversal de la bande 10. De la sorte, les bandes 10 de rechange peuvent être stockées à l'état replié en prenant un minimum de place.

En se référant à la Fig. 4, on note que la bande de guidage 10 présente en outre dans l'ensemble une excellente tenue au gauchissement : les raidisseurs 26 sont prolongés jusqu'à proximité immédiate des charnières 15, 16, 19, 20 et la partie centrale 14 offre en elle-même une rigidité remarquable.

Des raidisseurs secondaires 28, de moindre section, reprennent les efforts dus à la torsion dans les parties latérales 12, 13. La partie centrale 14 peut, elle-même, être munie de raidisseurs (visibles à la figure 4) s'étendant entre les flancs 22, 23. On peut conférer, à cette partie centrale 14, au choix, une section triangulaire ou trapézoïdale.

## Revendications

1. Dispositif d'ouverture (1) de conteneur (2) muni d'une bâche (3), comportant
- deux rails (4, 5), disposés parallèlement ,
- des chariots (6) coulissants, reliés chacun par une barre transversale (9) à un autre chariot (6) se trouvant sur l'autre rail correspondant, aptes à se déplacer le long desdits rails (4, 5),
- des bandes de guidage (10), s'étendant entre deux chariots (6) consécutifs, dont la face supérieure (11) est tournée vers ladite bâche (3), ces bandes de guidage (10) étant aptes à guider ladite bâche (3) pour la plier en accordéon lors de son ouverture, et
- des moyens de fixation, aptes à fixer les extrémités libres (17, 18) d'une bande de guidage (10) aux deux chariots (6) coulissant consécutifs,
caractérisé en ce que les bandes de guidage (10) sont en matière plastique moulée par injection et fabriquées d'un seul tenant, lesdites bandes de guidage (10) comportant deux parties latérales (12, 13) rigides, ces parties latérales (12, 13) étant reliées de façon articulée par leurs extrémités proximales à une partie centrale (14) au moyen de zones minces formant charnières.

2. Dispositif d'ouverture (1) suivant la revendication 1, caractérisé en ce que les parties latérales (12, 13) sont reliées par leurs extrémités distales aux extrémités libres (17, 18) au moyen de zones minces (19, 20) formant charnières.

3. Dispositif d'ouverture (1) suivant l'une quelconque des revendications 1 et 2 , caractérisé en ce que la partie centrale (14) présente, vue en coupe transversale, une face supérieure (21) et deux flancs inclinés (22, 23) convergeant vers le bas et en ce que les extrémités proximales des parties latérales (12, 13) comportent des arrêts (24, 25), chacun de ces arrêts (24, 25) formant, avec la face supérieure (11) de la partie latérale (12, 13) correspondante un angle sensiblement complémentaire à l'angle que forme le flanc correspondant (22, 23) avec la face supérieure (21) de la partie centrale (14).

4. Dispositif d'ouverture suivant l'une quelconque des revendications précédentes, caractérisé en ce que chaque partie latérale (12, 13) est pourvue de raidisseurs (26) à sa face inférieure.

5. Dispositif d'ouverture suivant la revendication 4, caractérisé en ce que, lorsqu'une bande de guidage (10) est en extension maximale, au moins une arête inférieure desdits raidisseurs (26) vient buter sur un rail (4, 5).

6. Dispositif d'ouverture suivant l'une quelconque des revendications précédentes, caractérisé en ce que chaque partie latérale (12, 13) est munie de protubérances (27) qui, lorsque la bande de guidage est en extension maximale, viennent buter sur un rail (4, 5).

7. Dispositif suivant l'une quelconque des revendications précédentes, caractérisé en ce que les zones minces formant charnières (15, 16, 19, 20) ont une largeur comprise entre 1 et 5 mm et une épaisseur comprise entre 0,4 et 2 mm.

8. Dispositif (1) selon l'une quelconque des revendications précédentes, caractérisé en ce que la partie centrale (14) présente, en section verticale longitudinale, une forme en substance triangulaire.

9. Dispositif (1) selon l'une quelconque des revendications 1 à 7, caractérisé en ce que la partie centrale (14) présente, en section verticale longitudinale une forme en substance trapézoidale.

10. Dispositif (1) selon l'une quelconque des revendications précédentes, caractérisé en ce que les moyens de fixation des extrémités libres sur les chariots impliquent une fixation par translation relative.

11. Dispositif suivant l'une quelconque des revendications 1 à 9, caractérisé en ce que lesdits moyens de fixation sont des organes métalliques choisis parmi les vis, les boulons et les rivets.

12. Dispositif (1) selon l'une quelconque des revendications précédentes, caractérisé en ce que la bâche (3) est une bâche de toit.

13. Dispositif (1) selon la revendication 12, caractérisé en ce que la bâche (3) comporte une partie latérale apte à couvrir au moins partiellement un flanc (7) du conteneur (2).

14. Dispositif (1) selon l'une quelconque des revendications 1 à 11, caractérisé en ce que la bâche (3) est une bâche latérale.

15. Dispositif (1) selon l'une quelconque des revendications 1 à 14 caractérisé en ce que la partie central (14) et les extrémités des parties laterales (12,13) sont fabriquées en matières plastiques de compositions différentes.

16. Bande de guidage (10) pour un dispositif d'ouverture (1) de conteneur (2) muni d'une bâche (3) comportant deux rails (4, 5), disposés parallèlement , des chariots (6) coulissants, reliés chacun par une barre transversale à un autre chariot (6), disposé sur l'autre rail aptes à se déplacer le long desdits rails (4, 5),
chaque bande de guidage (10), dont la face supérieure (11) est tournée vers ladite bâche (3), s'étendant entre deux chariots (6) consécutifs, étant aptes à guider ladite bâche (3) pour la plier en accordéon lors de son ouverture, et des moyens de fixation, aptes à fixer chaque extrémité libre (17, 18) d'une bande de guidage (10) à un chariot (6) coulissant,
caractérisée en ce qu'elle est en matière plastique moulée par injection et fabriquées d'un seul tenant, cette bande de guidage (10) comportant deux parties latérales (12, 13) rigides, ces parties latérales (12, 13) étant reliées de façon articulée par leurs extrémités proximales à une partie centrale (14) au moyen de zones minces formant charnières.

17. Bande de guidage (10) suivant la revendication 16, caractérisée en ce que les parties latérales (12, 13) sont reliées par leurs extrémités distales aux extrémités libres (17, 18) au moyen de zones minces (19, 20) formant charnières.

18. Bande de guidage (10) suivant l'une quelconque des revendications 16 et 17, caractérisée en ce que la partie centrale (14) présente, vue en coupe transversale, une face supérieure (21) et deux flancs inclinés (22, 23) convergeant vers le bas et en ce que les extrémités proximales des parties latérales (12, 13) comportent des arrêts (24, 25), chacun de ces arrêts (24, 25) formant, avec la face supérieure (11) de la partie latérale (12, 13) correspondante un angle sensiblement complémentaire à l'angle que forme le flanc correspondant (22, 23) avec la face supérieure (21) de la partie centrale (14).

19. Bande de guidage (10) suivant l'une quelconque des revendications 16 à 18,
caractérisée en ce que les moyens de fixacion de ses extrémités libres sur les chariots (6) impliquent une fixation par translation relative.

20. Bande de guidage (10) suivant l'une quelconque des revendicacions 16 à 18, caractérisée en ce que lesdits moyens de fixation sont des organes métalliques choisis parmi les vis, les boulons et les rivets.

21. Bande de guidage (10) suivant l'une quelconque des revendications 16 à 20 caractérisée en ce que la partie central (14) et les extrémités des parties laterales (12,13) sont fabriquées en matières plastiques de compositions différentes.

## Patentansprüche

1. Öffnungsvorrichtung (1) für einen Behälter (2), der mit einer Plane (3) versehen ist, mit folgendem:
- zwei Schienen (4, 5), die parallel zueinander angeordnet sind,
- Gleitschlitten (6), die jeweils durch einen Querstab (9) mit einem sich auf der anderen, dazugehörigen Schiene befindenden Schlitten (6) verbunden sind und sich entlang der Schienen (4, 5) bewegen können,
- Führungsbändern (10), die sich zwischen zwei aufeinanderfolgenden Schlitten (6) erstrecken und deren Oberseite (11) zu der genannten Plane (3) weist, wobei diese Führungsbänder (10) die genannte Plane (3) so führen können, daß sie bei ihrem Öffnen zieharmonikaartig gefaltet wird, und
- Befestigungsmitteln, mit denen die freien Enden (17, 18) eines Führungsbandes (10) an den beiden aufeinanderfolgenden Gleitschlitten (6) befestigt werden können,
dadurch gekennzeichnet, daß die Führungsbänder (10) aus spritzgegossenem Kunststoffmaterial bestehen und in einem Stück hergestellt sind, wobei die genannten Führungsbänder (10) zwei starre Seitenteile (12, 13) aufweisen, welche Seitenteile (12, 13) durch ihre proximalen Enden mittels Scharniere bildender, dünner Bereiche an einem mittleren Teil (14) angelenkt sind.

2. Öffnungsvorrichtung (1) nach Anspruch 1, dadurch gekennzeichnet, daß die Seitenteile (12, 13) durch ihre distalen Enden mittels Scharniere bildender, dünner Bereiche (19, 20) an den freien Enden (17, 18) angelenkt sind.

3. Öffnungsvorrichtung (1) nach einem der Ansprüche 1 oder 2, dadurch gekennzeichnet, daß der mittlere Teil (14) in Querschnittsansicht eine Oberseite (21) und zwei geneigte Flanken (22, 23) aufweist, die nach unten konvergieren, und daß die proximalen Enden der Seitenteile (12, 13) Halteglieder (24, 25) aufweisen, die jeweils mit der Oberseite (11) des dazugehörigen Seitenteils (12, 13) einen zu dem Winkel, der durch die dazugehörige Flanke (22, 23) mit der Oberseite (21) des mittleren Teils (14) gebildet wird, im wesentlichen komplementären Winkel bilden.

4. Öffnungsvorrichtung nach einem der vorhergehenden Ansprüche, dadurch gekennzeichnet, daß jeder Seitenteil (12, 13) an seiner unteren Seite mit Versteifungen (26) versehen ist.

5. Öffnungsvorrichtung nach Anspruch 4, dadurch gekennzeichnet, daß, wenn ein Führungsband (10) maximal ausgestreckt ist, mindestens eine untere Kante der genannten Versteifungen (26) an einer Schiene (4, 5) zur Anlage kommt.

6. Öffnungsvorrichtung nach einem der vorhergehenden Ansprüche, dadurch gekennzeichnet, daß jeder Seitenteil (12, 13) mit Vorsprüngen (27) versehen ist, die, wenn das Führungsband maximal ausgestreckt ist, an einer Schiene (4, 5) zur Anlage kommen.

7. Vorrichtung nach einem der vorhergehenden Ansprüche, dadurch gekennzeichnet, daß die Scharniere bildenden dünnen Bereiche (15, 16, 19, 10) eine Breite zwischen 1 und 5 mm und eine Dicke zwischen 0,4 und 2 mm aufweisen.

8. Vorrichtung (1) nach einem der vorhergehenden Ansprüche, dadurch gekennzeichnet, daß der mittlere Teil (14) im vertikalen Längsschnitt eine im wesentlichen dreieckige Form aufweist.

9. Vorrichtung (1) nach einem der Ansprüche 1 bis 7, dadurch gekennzeichnet, daß der mittlere Teil (14) im vertikalen Längsschnitt eine im wesentlichen trapezförmige Gestalt aufweist.

10. Vorrichtung (1) nach einem der vorhergehenden Ansprüche, dadurch gekennzeichnet, daß die Mittel zur Befestigung der freien Enden an den Schlitten eine Befestigung durch relative Translationsbewegung umfassen.

11. Vorrichtung nach einem der Ansprüche 1 bis 9, dadurch gekennzeichnet, daß es sich bei den genannten Befestigungsmitteln um metallische Elemente handelt, die unter Schrauben, Bolzen und Nieten ausgewählt sind.

12. Vorrichtung (1) nach einem der vorhergehenden Ansprüche, dadurch gekennzeichnet, daß es sich bei der Plane (3) um eine Dachplane handelt.

13. Vorrichtung (1) nach Anspruch 12, dadurch gekennzeichnet, daß die Plane (3) einen Seitenteil aufweist, der eine Flanke (7) des Behälters (2) zumindest teilweise bedecken kann.

14. Vorrichtung (1) nach einem der Ansprüche 1 bis 11, dadurch gekennzeichnet, daß es sich bei der Plane (3) um eine Seitenplane handelt.

15. Vorrichtung (1) nach einem der Ansprüche 1 bis 14, dadurch gekennzeichnet, daß der mittlere Teil (14) und die Enden der Seitenteile (12, 13) aus Kunststoffmaterialien unterschiedlicher Zusammensetzung hergestellt sind.

16. Führungsband (10) für eine Öffnungsvorrichtung (1) für einen mit einer Plane (3) versehenen Behälter (2) mit zwei parallel angeordneten Schienen (4, 5), Gleitschlitten (6), die jeweils durch einen Querstab mit einem auf der anderen Schiene angeordneten, anderen Schlitten (6) verbunden sind und sich entlang der genannten Schienen (4, 5) bewegen können,
wobei jedes Führungsband (10), dessen Oberseite (11) zu der genannten Plane (3) weist, sich zwischen zwei aufeinanderfolgenden Schlitten (6) erstreckt, die die genannte Plane (3) so führen können, daß sie bei ihrem Öffnen zieharmonikaartig gefaltet wird,
und Befestigungsmitteln, mit denen jedes freie Ende (17, 18) eines Führungsbandes (10) an einem Gleitschlitten (6) befestigt werden kann,
dadurch gekennzeichnet, daß es aus spritzgegossenem Kunststoffmaterial besteht und in einem Stück hergestellt ist, wobei dieses Führungsband (10) zwei starre Seitenteile (12, 13) aufweist, welche Seitenteile (12, 13) durch ihre proximalen Enden mittels Scharniere bildender, dünner Bereiche an einem mittleren Teil (14) angelenkt sind.

17. Führungsband (10) nach Anspruch 16, dadurch gekennzeichnet, daß die Seitenteile (12, 13) durch ihre distalen Enden mittels Scharniere bildender, dünner Bereiche (19, 20) an den freien Enden (17, 18) angelenkt sind.

18. Führungsband (10) nach Anspruch 16 oder 17, dadurch gekennzeichnet, daß der mittlere Teil (14) in Querschnittsansicht eine Oberseite (21) und zwei geneigte Flanken (22, 23) aufweist, die nach unten konvergieren, und daß die proximalen Enden der Seitenteile (12, 13) Halteglieder (24, 25) aufweisen, die jeweils mit der Oberseite (11) des dazugehörigen Seitenteils (12, 13) einen zu dem Winkel, der durch die dazugehörige Flanke (22, 23) mit der Oberseite (21) des mittleren Teils (14) gebildet wird, im wesentlichen komplementären Winkel bilden.

19. Führungsband (10) nach einem der Ansprüche 16 bis 18, dadurch gekennzeichnet, daß die Mittel zur Befestigung seiner freien Enden an den Schlitten (6) eine Befestigung durch relative Translationsbewegung umfassen.

20. Führungsband (10) nach einem der Ansprüche 16 bis 18, dadurch gekennzeichnet, daß es sich bei den Befestigungsmitteln um metallische Elemente handelt, die unter Schrauben, Bolzen und Nieten ausgewählt sind.

21. Führungsband (10) nach einem der Ansprüche 16 bis 20, dadurch gekennzeichnet, daß der mittlere Teil (14) und die Enden der Seitenteile (12, 13) aus Kunststoffmaterialien unterschiedlicher Zusammensetzung hergestellt sind.

## Claims

1. Opening device (1) for a container (2) furnished with a tarpaulin (3), including
- two rails (4, 5), arranged in parallel,
- sliding carriages (6), each linked by a transverse bar (9) to another carriage (6) located on the other corresponding rail, able to move along the said rails (4, 5),
- guide bands (10), extending between two consecutive carriages (6), the upper face (11) of which is turned towards the said tarpaulin (3), these guide bands (10) being able to guide the said tarpaulin (3) so as to fold it concertina-fashion during the opening thereof, and
- fixing means able to fix the free ends (17, 18) of a guide band (10) to two consecutive sliding carriages (6),
characterized in that the guide bands (10) are made of injection-moulded plastic and are manufactured in one piece, the said guide bands (10) including two rigid lateral portions (12, 13), these lateral portions (12, 13) being linked in an articulated manner by their proximal ends to a central portion (14) by means of thin regions forming hinges.

2. Opening device (1) according to Claim 1, characterized in that the lateral portions (12, 13) are linked by their distal ends to the free ends (17, 18) by means of thin regions (19, 20) forming hinges.

3. Opening device (1) according to either one of Claims 1 and 2, characterized in that the central portion (14) exhibits, viewed in transverse section, an upper face (21) and two downwards converging inclined flanks (22, 23) and in that the proximal ends of the lateral portions (12, 13) include stops (24, 25), each of these stops (24, 25) forming, with the upper face (11) of the corresponding lateral portion (12, 13), an angle substantially complementary to the angle which the corresponding flank (22, 23) forms with the upper face (21) of the central portion (14).

4. Opening device according to any one of the pre-ceding claims, characterized in that each lateral portion (12, 13) is provided with stiffeners (26) on its lower face.

5. Opening device according to Claim 4, characterized in that, when a guide band (10) is maximally extended, at least one lower ridge of the said stiffeners (26) abuts on a rail (4, 5).

6. Opening device according to any one of the pre-ceding claims, characterized in that each lateral portion (12, 13) is furnished with protuberances (27) which, when the guide band is maximally extended, abut on a rail (4, 5).

7. Device according to any one of the preceding claims, characterized in that the thin regions forming hinges (15, 16, 19, 20) have a width of between 1 and 5 mm and a thickness of between 0.4 and 2 mm.

8. Device (1) according to any one of the preceding claims, characterized in that the central portion (14) exhibits, in longitudinal vertical cross-section, an essentially triangular shape.

9. Device (1) according to any one of Claims 1 to 7, characterized in that the central portion (14) exhibits, in longitudinal vertical cross-section, an essentially trapezoidal shape.

10. Device (1) according to any one of the preceding claims, characterized in that the means for fixing the free ends to the carriages involve fixing by relative translation.

11. Device according to any one of Claims 1 to 9, characterized in that the said fixing means are metal members chosen from among screws, bolts and rivets.

12. Device (1) according to any one of the preceding claims, characterized in that the tarpaulin (3) is a roof tarpaulin.

13. Device (1) according to Claim 12, characterized in that the tarpaulin (3) includes a lateral portion able to at least partially cover a flank (7) of the container (2).

14. Device (1) according to any one of Claims 1 to 11, characterized in that the tarpaulin (3) is a lateral tarpaulin.

15. Device (1) according to any one of Claims 1 to 14, characterized in that the central portion (14) and the ends of the lateral portions (12, 13) are manufactured from plastics of different compositions.

16. Guide band (10) for an opening device (1) for a container (2) furnished with a tarpaulin (3), comprising two rails (4, 5), arranged in parallel, sliding carriages (6), each linked by a transverse bar to another carriage (6), arranged on the other rail, which are able to move along the said rails (4, 5),
each guide band (10), the upper face (11) of which is turned towards the said tarpaulin (3), extending between two consecutive carriages (6), being able to guide the said tarpaulin (3) so as to fold it concertina-fashion during the opening thereof, and fixing means able to fix each free end (17, 18) of a guide band (10) to a sliding carriage (6),
characterized in that it is made of injection-moulded plastic and is manufactured in one piece, this guide band (10) including two rigid lateral portions (12, 13), these lateral portions (12, 13) being linked in an articulated manner by their proximal ends to a central portion (14) by means of thin regions forming hinges.

17. Guide band (10) according to Claim 16, characterized in that the lateral portions (12, 13) are linked by their distal ends to the free ends (17, 18) by means of thin regions (19, 20) forming hinges.

18. Guide band (10) according to either of Claims 16 and 17, characterized in that the central portion (14) exhibits, viewed in transverse section, an upper face (21) and two downwards converging inclined flanks (22, 23) and in that the proximal ends of the lateral portions (12, 13) include stops (24, 25), each of these stops (24, 25) forming, with the upper face (11) of the corresponding lateral portion (12, 13), an angle substantially complementary to the angle which the corresponding flank (22, 23) forms with the upper face (21) of the central portion (14).

19. Guide band (10) according to any one of Claims 16 to 18, characterized in that the means for fixing its free ends to the carriages (6) involve fixing by relative translation.

20. Guide band (10) according to any one of Claims 16 to 18, characterized in that the said fixing means are metal members chosen from among screws, bolts and rivets.

21. Guide band (10) according to any one of Claims 16 to 20, characterized in that the central portion (14) and the ends of the lateral portions (12, 13) are manufactured from plastics of different compositions.
